# EUROPÄISCHE PATENTSCHRIFT

(11) **EP 2 775 232 B1**
(45) Veröffentlichungstag und Bekanntmachung des Hinweises auf die Patenterteilung: **10.04.2019**
(21) Anmeldenummer: 14405016.8
(22) Anmeldetag: 24.02.2014
(51) Int. Cl.: F24S 25/613, F24S 25/61, F24S 25/33

(54) **Befestigungsvorrichtung für die Befestigung einer Unterkonstruktion für die Aufnahme von Solarmodulen und -kollektoren**
Fastening device for fastening a substructure for holding solar modules and collectors
Dispositif de fixation pour la fixation d'une sous-structure pour la réception de modules et capteurs solaires

(30) Priorität: 04.03.2013 CH 5382013
(43) Veröffentlichungstag der Anmeldung: 10.09.2014
(73) Patentinhaber: SOLTOP Schuppisser AG, 8353 Elgg (CH)
(72) Erfinder: Schuppisser, Fritz, 8400 Winterthur (CH)
(74) Vertreter: Gachnang, Hans Rudolf

(56) Entgegenhaltungen:
- EP-A1- 2 194 335
- EP-A1- 2 527 762
- EP-A2- 2 423 621
- BE-A3- 1 019 560
- DE-A1- 10 344 202
- DE-A1-102010 007 016

## Beschreibung

Gegenstand der Erfindung ist eine Befestigungsvorrichtung für die Befestigung einer Unterkonstruktion für Solarmodule und Sonnenkollektoren auf einem Schrägdach.

Befestigungsvorrichtungen wie Montagebügel, auch Dachhaken genannt, sind in vielen Ausführungen bekannt und ermöglichen eine sichere und einfache Befestigung von Unterkonstruktionen für Solar-Module und Sonnenkollektoren auf Schrägdächern. Die Montagebügel werden bei Ziegeldächern an einem Befestigungsfuss, der auf eine Pfette oder Sparren des Schrägdachs montiert wird, befestigt. Um unterschiedliche Dicken der Ziegel ausgleichen zu können, muss der Abstand des Montagebügels zum Befestigungsfuss vertikal einstellbar sein. An bekannten Montagesystemen sind daher entweder am Fuss vertikal verlaufende Schlitze wie z.B. in der DE 103 44 202 A1 gezeigt, oder auch schräg verlaufende Schlitze angebracht oder es ist am Montagebügel ein Langloch ausgebildet, siehe EP 2 423 621 A2, EP 2 194 335 A1, EP 2 527 762 A1, so dass auf einfache Weise der Abstand zwischen dem Sparren und dem Befestigungspunkt für die
Unterkonstruktion, auf der die Solar-Module aufgelegt werden, exakt einstellbar ist.

Im Weiteren ist es bekannt, den Montagebügel derart auszubilden, dass der in der Dachdeckung geführte Abschnitt des Montagebügels parallel zum Ziegel zu liegen kommt. Dies bedeutet, dass dieser Schenkel zwingend in einem Winkel von ca. 5° zur Auflage des Fusses auf dem Sparren verlaufen muss. Um eine formschlüssige Verbindung zwischen dem auf dem Sparren zu befestigenden Fuss und dem Montagebügel in jeder Lage zu erlangen, ist es bekannt, sowohl am Fuss als auch am Montagebügel horizontal verlaufende Rillen auszubilden, die ein vertikales Verschieben des Bügels auf dem Fuss verhindern und die die formschlüssige Verbindung auch ohne übermässig hohe Kräfte durch die Verbindungsschraube notwendig machen (vergl. DE 20 2005 019 897 und WO 2010/060391).

Um die Verbindung des Montagebügels mit der Unterkonstruktion für die Solarmodule, zum Beispiel einem aus horizontal und vertikal, d.h. in der Falllinie des Schrägdaches verlaufenden Profilschienen, kurz Vertikalschienen, sicher vornehmen zu können, ist an dem dem Fuss gegenüberliegenden Ende des Montagebügels ein Anschlusselement ausgebildet, welches ebenfalls eine Ausrichtung der Profilschienen bezüglich der Dachneigung und bezüglich des Abstandes der Profilschienen zu den Ziegeloberflächen ermöglicht.

Die bekannten Anschlusselemente umfassen meist in vertikaler und/oder horizontaler Richtung verlaufende Schlitze am Montagebügel, durch welche mit Schrauben und Muttern, welche die Vertikalschienen durchdringen, die Justierung vorgenommen werden kann (vergl. oben genannte bekannte Dokumente). Bei diesen bekannten Vorrichtungen benötigt das Montagepersonal stets beide Hände, um die Schrauben/Mutterverbindungen anzubringen und insbesondere festzuziehen. Es ist aus der DE 103 44 202 A1 auch bekannt, ein Klemmelement für einen Solarmodulrahmen vorzusehen. Das Klemmelement weist zwei Klemmarme auf, die mittels einer in einem Flansch des Dachhakens gehaltenen Schraube verspannt werden können, sodass der Solarmodulrahmen vom Klemmelement gegen den Flansch des Dachhakens gedrückt wird.

Das Dokument EP 2 423 621 A2 beschreibt weiterhin eine Befestigungsvorrichtung für die Befestigung einer Unterkonstruktion für Solarmodule und Sonnenkollektoren auf einem Schrägdach, umfassend ein Befestigungselement für die Montage der Vorrichtung auf der Pfette oder dem Pfarren einer Dachunterkonstruktion für Ziegel- oder Wellplattendächer, einen mit dem Befestigungselement verbindbaren Montagebügel und ein Vertikalprofil.

Eine Aufgabe der vorliegenden Erfindung besteht darin, einen Montagebügel zu schaffen, welcher in bekannter Weise mit einem Befestigungsfuss an dem Sparren befestigt werden kann und der ein einfaches, dauerhaftes Ausrichten der Vertikalprofile und der Horizontalprofile ermöglicht.

Gelöst wird diese Aufgabe durch eine Anordnung mit den Merkmalen des Patentanspruchs 1. Vorteilhafte Ausgestaltungen der Anordnung sind in den abhängigen Ansprüchen umschrieben.

Durch die Ausbildung eines Schlitzes am oberen freien Ende des Montagebügels, welches dem Befestigungsfuss gegenüberliegt, kann das Vertikalprofil beziehungsweise ein an diesem vertikal verlaufender Schenkel in den Montagebügel lose eingelegt werden und wird dort provisorisch gehalten, d.h. dem Ausrichten aller Vertikal- und an diesen bereits befestigten Horizontalprofile in vorgegebenem Abstand zur Dachhaut. Nach dem Justieren der Unterkonstruktion bezüglich der Dachhaut kann durch einfaches Eindrehen einer selbstschneidenden Schraube die definitive Verbindung zwischen Montagebügel und der Unterkonstruktion vorgenommen werden. Für die Befestigung muss einzig die selbstschneidende Schraube, die bereits am Montagebügel eingesetzt ist, eingeschraubt werden. Die Unterkonstruktion kann folglich durch Einlegen der Vertikalprofile in die Montagebügel und das anschliessende Befestigen der Horizontalprofile aufgebaut werden und anschliessend als Gesamtes ausgerichtet und auf der richtigen Höhe über dem Dach durch Eindrehen der selbstschneidenden Schrauben definitiv angebracht werden.

Anhand eines illustrierten Ausführungsbeispiels wird die Erfindung näher erläutert. Es zeigen:
- Figur 1: eine Seitenansicht eines Montagebügels mit Befestigungsfuss, Vertikalprofil in maximal höchster Position befestigt
- Figur 2: eine Seitenansicht eines Montagebügels mit Befestigungsfuss, Vertikalprofil in maximal tiefster Position befestigt,
- Figur 3: eine perspektivische Darstellung des Montagebügels mit Befestigungsfuss sowie in maximal höchster Position befestigtes Vertikalprofil,
- Figur 4: eine perspektivische Darstellung des Montagebügels mit Befestigungsfuss sowie in maximal tiefster Position befestigtes Vertikalprofil und
- Figur 5: einen perspektivischen Ausschnitt des freien Endes des Befestigungsschenkels mit der Bohrung.

In den Figuren ist mit Bezugszeichen 1 ein Befestigungsfuss dargestellt, der als Stranggussprofil herstellbar ist und dessen Auflagefläche 3 mit Schrauben auf einer Pfette oder Sparren (Pfette nicht dargestellt) befestigt werden kann. Am im Wesentlichen vertikal verlaufenden Schenkel, kurz Vertikalschenkel 5 sind einseitig Rillen 7 ausgebildet, welche mit komplementären Rillen 7' am Fussschenkel 9 eines Montagebügels 11 ausgebildet sind. Im Fussschenkel 9 ist zudem eine vertikal verlaufende schlitzförmige Ausnehmung 13 zum Hindurchführen einer Schraube 14 angebracht. Das Gewinde der Schraube 14 kämmt entweder direkt im Schenkel 5 des Fusses 1 oder in einem Gewinde einer Mutter 16, die am Schenkel 5 gehalten ist. Befestigungsfüsse 1 der beschriebenen Art sind bekannt.

An den im Wesentlichen vertikal verlaufenden Fussschenkel 9 des Montagebügels 11 schliesst ein Anschlussschenkel 15 an, der zur Auflagefläche 3 in einem spitzen Winkel von ca. 5° liegt, welcher Winkel der Neigung der Dachziegeloberfläche zur Pfette entspricht. Selbstverständlich kann der spitze Winkel an die Ausbildung und Winkellage der verwendeten Dachziegel angepasst sein und den angegebenen Winkel von 5° unter- oder überschreiten.

An den Anschlussschenkel 15 schliesst in einem Winkel von ca. 85°-90° ein Überbrückungsschenkel 17 an, um die Dicke des Dachziegels zu überwinden. Am oberen Ende des Überbrückungsschenkels 17 schliesst weiter ein Befestigungsschenkel 19 an, der in Längsrichtung aufgespalten ausgebildet ist und zwei Befestigungsschenkelabschnitte 19', 19" bildet. Der dadurch gebildete Schlitz 21 kann sich vom freien Ende 23 des Befestigungsschenkels 19 bis in den knieförmigen Übergang 24 vom Überbrückungsschenkel 17 zum Befestigungsschenkel 19 erstrecken, welche unter einem Winkel von ca. 45° verlaufen.

Am freien Ende 23 des Befestigungsschenkels 19 ist mindestens eine, vorzugsweise sind zwei Bohrungen 25 ausgebildet, die mit Bohrungen in den freien Enden 23 am benachbarten Befestigungsschenkelteil 19 fluchten, d.h. die Bohrungen 25 liegen koaxial zueinander.

In den Bohrungen 25 sind in einer bevorzugten Ausführung rippenartige, längs den Bohrungen 25 verlaufende Vorsprünge 35 ausgebildet, in die sich die Windungen der selbstschneidenden Schrauben 29 einschneiden können.

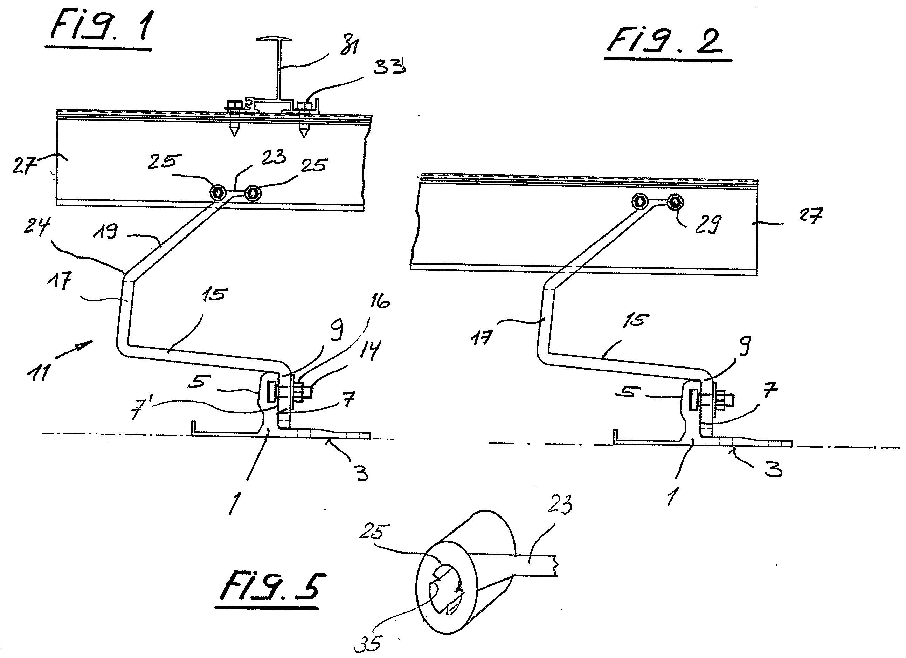

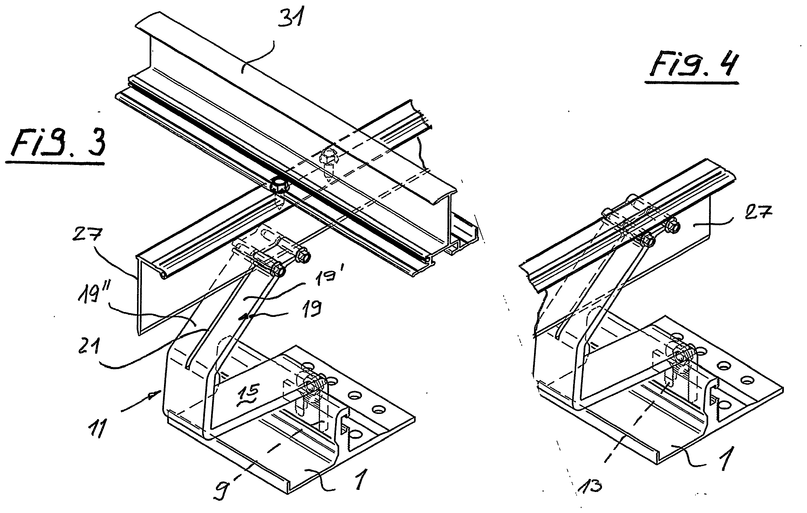

Die beiden in den Figuren 3 und 4 in Perspektive gut sichtbar dargestellten Befestigungsschenkelabschnitte 19' und 19" dienen zur Aufnahme eines ersten Vertikalprofils 27, das beispielsweise als L-förmiges Blech oder Strangpressprofil ausgebildet ist. Alternativ zu einer L-Form kann auch eine Rechteck- oder T-Form des Vertikalprofils eingesetzt werden. In der in Figur 2 rechts und in der Figur 4 hinten liegenden Abbildung liegt das Vertikalprofil abgesenkt lose innerhalb des Schlitzes 21, das heisst nach der Montage der Montagebügel 11 am Befestigungsfuss 1 kann das Vertikalprofil provisorisch in die Schlitze 21 eingelegt werden. Es wird dabei bis zur nachfolgenden Ausrichtung gehalten. Anschliessend erfolgt ein Höhenausgleich, das heisst eine Nivellierung der Mehrzahl der nebeneinander anzuordnenden Vertikalprofile 27 und den allenfalls bereits auf den Vertikalprofilen montierten Horizontalprofilen 31 in einer gemeinsamen Ebene. In der seitlich zur in Figur 1 dargestellten zweiten Abbildung in Fig. 2 ist das Vertikalprofil 27 vertikal annähernd ganz nach unten verschoben worden und mit Schrauben 29 befestigt. Die Schrauben 29 durchdringen selbstschneidend das Vertikalprofil 27 und schneiden sich auch in die Bohrung 25 im Befestigungsschenkelabschnitt 19' und in die Bohrungen 25 im zweiten Befestigungsschenkelabschnitt 19" ein. Die Befestigung des Vertikalprofils 27 kann folglich mühelos durch Eindrehen der Schrauben 29 in die Bohrungen 25 vorgenommen werden. Die in der Falllinie des Daches und damit parallel zu den Pfetten verlaufenden Vertikalprofile 27 dienen zur Auflage von rechtwinklig dazu verlaufenden und speziell ausgebildeten Horizontalprofilen 31 für Sonnenkollektoren oder Solarmodule. Die Horizontalprofile 31 können wiederum mit selbstschneidenden Schrauben 33 an den Vertikalprofilen 27 befestigt werden.

Es ist ersichtlich, dass das definitive Ausrichten der Vertikalprofile 27 auf den mit dem Dach verbundenen Montagebügeln 11 sehr einfach durchgeführt werden kann. parallel zum Dach verlaufender Richtung kann folglich mühelos durch Eindrehen der Schrauben 29 in die Bohrungen 25 und dadurch Durchdringen des Vertikalprofils 27 vorgenommen werden. Die in der Falllinie des Daches und damit parallel zu den Pfetten verlaufenden Vertikalprofile 27 dienen zur Auflage von rechtwinklig dazu verlaufenden und speziell ausgebildeten Horizontalprofilen 31 für Sonnenkollektoren oder Solarmodule. Die Horizontalprofile 31 können wiederum mit selbstschneidenden Schrauben 33 an den Vertikalprofilen 27 befestigt werden.

Es ist ersichtlich, dass das definitive Ausrichten der Vertikalprofile 27 auf den mit dem Dach verbundenen Montagebügeln 11 sehr einfach durchgeführt werden kann.

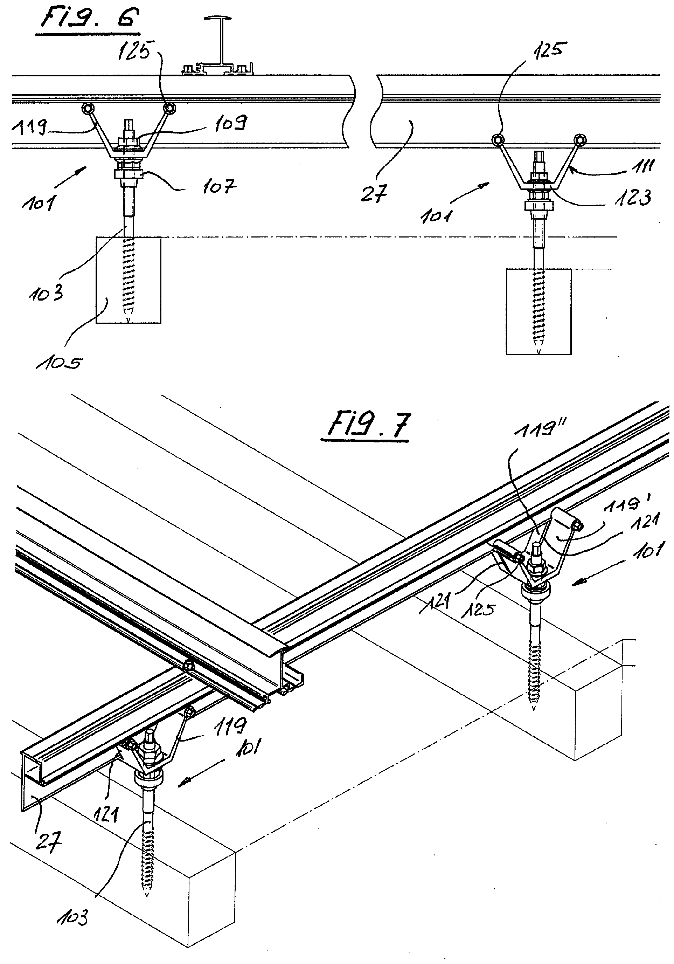

In den Figuren 6 und 7 wird eine weitere Ausführungsform der Befestigungsvorrichtung 101 für ein Wellplatten- oder Trapezplattendach dargestellt. Beim Wellplatten- oder Trapezplattendach erfolgt die Montage der Vorrichtung nicht durch einen Bügel, der zwischen zwei Dachabschnitten hindurchgeführt wird, sondern analog zur Befestigung von Wellplatten- oder Trapezplattendächern durch eine Bohrung durch die Dachplatte hindurch, und zwar jeweils auf einem Wellenhügel, bzw. auf einer Trapezfläche, die am höchsten liegt. Als Befestigungselemente dient demzufolge ein Schraubbolzen 103, welcher mit seinem Gewindeteil in einen Dachbalken 105 eingeschraubt wird. Auf dem oberen Ende des Gewindebolzens 103, an welchem ebenfalls ein Gewinde ausgebildet ist, wird durch zwei gekonterte Muttern 107 und 109 ein Montagebügel 111 mit zwei V-förmig angeordneten Befestigungsschenkeln 119 festgehalten. Die beiden Befestigungsschenkel 119 sind an ihren unteren Enden durch eine Verbindungsplatte 123 miteinander verbunden. Die Verbindungsplatte 123 wird von Gewindebolzen durchdrungen und an dieser Stelle wird der Montagebügel 111 durch die beiden Muttern 107 und 109 festgehalten.

Die beiden Befestigungsschenkel 119 sind wie im ersten Ausführungsbeispiel durch einen Schlitz 121 in zwei Abschnitte 119' unterteilt. Dieser Schlitz 121 dient wiederum dazu, den vertikalen Schenkel am Vertikalprofil 27 in den Schlitz 121 einzuführen und wie im ersten Ausführungsbeispiel nach dem Ausnivellieren die Unterkonstruktion für Solarmodule und Sonnenkollektoren zu befestigen. Gut ersichtlich ist in Figur 6 auf der linken Seite, dass dort das Vertikalprofil 27 eingelegt und noch nicht befestigt ist und dadurch die Bohrungen 125 an den Enden der Befestigungsschenkel ganz oben liegen. Auf der rechten Seite in Figur 6 ist dargestellt, dass das Vertikalprofil 27 nach dem Ausnivellieren angehoben ist und dadurch die Bohrungen 125 in den Bereich der unteren Kante des Vertikalprofils 27 kommen. Selbstverständlich sind auch Positionen zwischen den zwei Extremen möglich, wenn dies durch die Ausrichtung notwendig ist.

Die definitive Befestigung bzw. Verbindung der Montagebügel 111 mit den Vertikalprofilen 27 erfolgt in gleicher Weise wie im ersten Ausführungsbeispiel gemäss den Figuren 1-4.

### Legende der Bezugszeichen

- 1: Befestigungselement
- 3: Auflagefläche
- 5: Schenkel
- 7: Rillen
- 9: Fussschenkel
- 11: Montagebügel
- 13: schlitzförmige Ausnehmung
- 14: Schraube
- 15: Anschlussschenkel
- 16: Mutter
- 17: Überbrückungsschenkel
- 19: Befestigungsschenkel
- 21: Schlitz
- 23: freies Ende v. 19
- 24: Uebergang
- 25: Bohrungen
- 27: Vertikalprofil
- 29: Schrauben
- 31: Horizontalprofil
- 33: Schrauben
- 35: rippenförmige Vorsprünge
- 101: Befestigungselement
- 103: Gewindebolzen
- 105: Dachpfette
- 107: Mutter
- 109: Mutter
- 111: Montagebügel
- 119: Befestigungsschenkel
- 121: Schlitz
- 123: Verbindungsplatte
- 125: Bohrung

## Patentansprüche

1. Befestigungsvorrichtung für die Befestigung einer Unterkonstruktion für Solarmodule und Sonnenkollektoren auf einem Schrägdach, umfassend ein Befestigungselement (1, 101) für die Montage der Vorrichtung auf der Pfette oder dem Sparren einer Dachunterkonstruktion für Ziegel- oder Wellplattendächer, wobei ein mit dem Befestigungselement (1, 101) verbindbarer Montagebügel (11, 111) und ein Vertikalprofil (27) vorgesehen sind, wobei der zuoberst liegende Abschnitt des Montagebügels (11, 111) als Befestigungsschenkel (19, 119) für das auf dem Schrägdach in Falllinie anzuordnende Vertikalprofil (27) für die Unterkonstruktion fungiert, wobei der Befestigungsschenkel (19, 119) am Montagebügel (11, 111) als ein gabelförmig aufgespaltenes Ende ausgebildet ist und zwei Befestigungsschenkelabschnitte (19', 19", 119', 119") zum werkzeuglosen Einlegen oder Einschieben eines Schenkels des Vertikalprofils (27) umfasst, wobei durch Eindrehen einer Schraube (29, 129) mit selbstschneidendem Gewinde eine definitive Verbindung des Montagebügels (11, 111) mit dem Vertikalprofil herstellbar ist, wobei das gabelförmige Ende durch einen Schlitz (21, 121) im Befestigungsschenkel (19) gebildet wird und der Befestigungsschenkel (19, 119) in zwei parallel verlaufende Befestigungsschenkelabschnitte (19', 19"; 119', 119") aufgeteilt ist, so dass das Vertikalprofil (27) in den Schlitz (21,121) eingelegt und provisorisch gehalten wird.

2. Befestigungsvorrichtung nach dem Anspruch 1, **dadurch gekennzeichnet, dass** am Ende der Befestigungsschenkelabschnitte (19', 19"; 119', 119") je mindestens eine Bohrung (25, 125) ausgebildet ist.

3. Befestigungsvorrichtung nach Anspruch 2, **dadurch gekennzeichnet, dass** die sich gegenüberliegenden Bohrungen (25, 125) koaxial zueinander liegen.

4. Befestigungsvorrichtung nach Anspruch 3, **dadurch gekennzeichnet, dass** eine der beiden koaxial liegenden Bohrungen (25, 125) einen kleineren Durchmesser aufweist, so dass die Schraube (29, 129) mit selbstschneidendem Gewinde in der kleineren Bohrung (25, 125) Halt findet oder dass die Bohrungen (25, 125) einen Durchmesser aufweisen, der grösser ist als der Durchmesser der Schraube (29, 129) und letztere im Vertikalprofil (27) gehalten wird.

5. Befestigungsvorrichtung nach Anspruch 3, **dadurch gekennzeichnet, dass** die Bohrungen (25, 125) an deren inneren Wandung rippenförmig längs verlaufende Vorsprünge (35) aufweisen.

## Claims

1. A fastening device for fastening a substructure for solar modules and solar collectors on a pitched roof, comprising a fastening element (1, 101) for mounting the device on the purlin or the rafter of a roof substructure for tiled or corrugated sheet roofs, wherein a vertical profile (27) and a mounting bracket (11, 111) connectable with the fastening element (1, 101) are provided, wherein the uppermost portion of the mounting bracket (11, 111) functions as a fastening arm (19, 119) for the vertical profile (27), to be arranged on the pitched roof in the line of slope, for the substructure, wherein the fastening arm (19, 119) is formed on the mounting bracket (11, 111) as a forked split end and comprises two fastening arm portions (19', 19", 119', 119") for tool-free insertion or pushing in of an arm of the vertical profile (27), wherein, by screwing in a screw (29, 129) with self-tapping thread, a definitive connection is producable between the mounting bracket (11, 111) and the vertical profile, wherein the forked end is formed by a slot (21, 121) in the fastening arm (19) and the fastening arm (19, 119) is divided into two fastening arm portions (19', 19"; 119', 119") extending in parallel, such that the vertical profile (27) is inserted into the slot (21, 121) and held provisionally in place.

2. The fastening device according to Claim 1, **characterized in that** at least one hole (25, 125) is formed at the end of each of the fastening arm portions (19', 19"; 119', 119") .

3. The fastening device according to Claim 2, **characterized in that** the mutually opposing holes (25, 125) are situated coaxially relative to one another.

4. The fastening device according to Claim 3, **characterized in that** one of the two coaxially situated holes (25, 125) has a smaller diameter, such that the screw (29, 129) with self-tapping thread finds purchase in the smaller hole (25, 125) or **in that** the holes (25, 125) have a diameter which is greater than the diameter of the screw (29, 129) and the latter is held in the vertical profile (27).

5. The fastening device according to Claim 3, **characterized in that** the holes (25, 125) have projections (35) extending longitudinally in the form of ribs along the inner wall thereof.

## Revendications

1. Dispositif de fixation pour la fixation d'une sous-structure pour modules et capteurs solaires sur un toit en pente, comprenant un élément de fixation (1, 101) pour le montage du dispositif sur la panne ou sur le chevron d'une sous-structure de toit pour toits en tuiles ou en plaques ondulées, un support de montage (11, 111) pouvant être relié avec l'élément de fixation (1, 101) et un profil vertical (27) étant prévus, la section se trouvant en haut du support de montage (11, 111) pour le profil vertical (27) devant être disposé sur le toit incliné en ligne de pente servant de branche de fixation (19, 119) pour la sous-structure, la branche de fixation (19, 119) étant formée comme une extrémité divisée en forme de fourche sur le support de montage (11, 111) et comprenant deux sections de branche de fixation (19', 19", 119', 119") pour la pose sans outils ou l'insertion d'une branche du profil vertical (27), une liaison définitive du support de montage (11, 111) étant réalisable avec le profil vertical par la rotation d'une vis (29, 129) avec filet autotaraudant, l'extrémité en forme de fourche étant formée par une fente (21, 121) dans la branche de fixation (19) et la branche de fixation (19, 119) étant divisée en deux sections de branche de fixation s'étendant de manière parallèle (19', 19" ; 119', 119"), de telle sorte que le profil vertical (27) peut être placé et maintenu provisoirement dans la fente (21, 121).

2. Dispositif de fixation selon la revendication 1, **caractérisé en ce qu'**au moins un alésage (25, 125) est formé à l'extrémité des sections de branche de fixation (19', 19" ; 119', 119").

3. Dispositif de fixation selon la revendication 2, **caractérisé en ce que** les alésages opposés les uns aux autres (25, 125) sont coaxiaux entre eux.

4. Dispositif de fixation selon la revendication 3, **caractérisé en ce qu'**un des deux alésages coaxiaux entre eux (25, 125) présente un diamètre inférieur, de telle sorte que la vis (29, 129) avec filet autotaraudant trouve un appui dans le plus petit alésage (25, 125), ou **en ce que** les alésages (25, 125) présentent un diamètre qui est supérieur au diamètre de la vis (29, 129) et **en ce que** cette dernière est maintenue dans le profil vertical (27).

5. Dispositif de fixation selon la revendication 3, **caractérisé en ce que** les alésages (25, 125) présentent sur leur paroi intérieure des saillies (35) en forme de nervures s'étendant de façon longitudinale.
